## Europäisches Patentamt

## European Patent Office

## Office européen des brevets

(11) Publication number: **0 032 842**
**B1**

(12) **EUROPEAN PATENT SPECIFICATION**

(45) Date of publication of patent specification: **24.04.85**

(21) Application number: **81300254.0**

(22) Date of filing: **21.01.81**

(51) Int. Cl.⁴: **B 65 B 43/44, B 65 G 47/06**

(54) Automatic container feed for container handling device.

<table>
<tr><td>(30) Priority: <b>22.01.80 CA 344142</b></td><td>(73) Proprietor: <b>CONSUMERS GLASS COMPANY LIMITED</b><br><b>401 The West Mall, Suite 900</b><br><b>Etobicoke Ontario M9C 5J7 (CA)</b></td></tr>
<tr><td>(43) Date of publication of application:<br><b>29.07.81 Bulletin 81/30</b></td><td></td></tr>
<tr><td>(45) Publication of the grant of the patent:<br><b>24.04.85 Bulletin 85/17</b></td><td>(72) Inventor: <b>Mancini, Derek Vincent</b><br><b>70 Main Street South</b><br><b>Markham, Ontario (CA)</b><br>Inventor: <b>Wright, William J.</b><br><b>164 Coldwater Road</b><br><b>Orillia, Ontario (CA)</b></td></tr>
<tr><td>(84) Designated Contracting States:<br><b>BE CH DE FR GB LI NL</b></td><td></td></tr>
<tr><td>(56) References cited:<br><b>DE-C- 565 224</b><br><b>DE-U-7 244 097</b><br><b>FR-A-1 562 844</b><br><b>GB-A-1 559 366</b><br><b>US-A-1 401 687</b><br><b>US-A-3 077 287</b><br><b>US-A-3 472 403</b><br><b>US-A-4 066 174</b><br><b>US-A-4 077 180</b></td><td>(74) Representative: <b>Fisher, Bernard et al</b><br><b>Raworth, Moss & Cook 36 Sydenham Road</b><br><b>Croydon Surrey CR0 2EF (GB)</b></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus and method for loading stacks of containers into chutes for holding such stacks.

With the advent of high speed container filling machines, such as those used in filling coffee creamer containers, condiment containers, small serving dessert, fruit cups and yogurt containers, it has become very difficult for a machine operator to tend to all functions of the machine and, at the same time, maintain a sufficient number of containers in the filling machine's supply chutes. There is now available filling machines for filling coffee creamers which attain speeds of filling and sealing 1,000 containers per minute. In order to supply or maintain containers in supply chutes for machines of this nature, the operator would have to spend most of his time loading containers into the supply chutes.

It is common to obtain delivery of containers in bags where there may be several rows of stacked containers in each bag. In manually loading supply chutes for container filling machines, it has always been a problem in transferring the stacks of containers from the bags into the filling machine chutes and can often result in separation of the stacks and resultant loss of several containers by dropping them on the floor. With accidents of this nature, and in view of the demands in maintaining containers in the supply chutes, there is often the necessity of shutting down the filling machine until the container supply can be reinstated. Thus, high speed filling machines with manual loading of containers cannot conveniently operate at full capacity.

Another difficulty with existing filling machines is that the supply chutes are usually vertical. An approach to placing stacks of containers in the supply chutes is to drop the stacks of containers through the tops of the chutes to ensure a supply of containers. This limits the amount of containers in the chute, because of an operator's reach and is time consuming and can increase the possibility of accidents in placing stacks of containers into the supply chutes.

To avoid these problems, automation of the placement of the stacks of containers into the filling machine chutes would be advantageous. An approach to automating the supply of containers is disclosed in United States patent 4,077,180. Individual rows, one by one, are placed into hoppers provided on an upright conveyor system which conveys individual stacks of containers upwardly to an area which is aligned with tubes which lead to the filling machine chutes. The stacks of containers are pushed through the tubes downwardly into the chutes to provide a supply of containers.

With the requirement that the stacks of containers be loaded into the chute through the top, the overall height of the stack-loading mechanism becomes cumbersome. A complex arrangement is required to pick up individual rows of stacked containers and transport them to the upper level for loading into the chutes. At the upper level, the operator cannot observe the operation of pushing stacks of containers into the chutes, so that should one or more of the stacks jam in the hoppers or tubes which lead to the chutes, the problem can go unnoticed which may cause damage to the machine and block the supply of containers to the chute.

Since machines of this nature are used for packaging various types of foods, a semi-sterile condition is needed which is usually provided by housing the equipment in a chamber. Due to the top loading of containers into the chute with the machine described in United States patent 4,077,180, the housing to provide a sterile environment is quite large, complex and costly. In addition, maintenance of this type of machine is difficult because of the high levels to which the transport mechanism for the containers passes in positioning stacks of containers for loading into the tops of supply chutes for filling machines.

The apparatus and method, according to this invention, overcome a number of the above problems in providing a system for easy loading of stacks of containers into the supply chutes for filling machines. The apparatus, according to this invention, comprises means adapted to support a row of stacked containers on its side. The chute has a container side entrance spaced above the bottom of and below the top of the chute to define upper and lower chute portions. The upper chute portion is of a height to receive a row of stacked containers. Means guides the pushed movement of a stack of containers from the support means through the container side entrance. Means is provided for pushing a stack of containers along the support means and guide means upwardly into the chute upper portion and releasing contact with such stack located in said chute upper portion to permit such stack to drop past the entrance into the chute lower portion.

The method, according to this invention, for loading stacks of container into a chute comprises supporting a stack of containers in a row on its side near the chute. The chute has a container side entrance spaced above the bottom of and below the top of the chute means to define upper and lower chute portions. A row of supported stacked containers is pushed towards the container entrance and such movement is guided through the entrance upwardly into the chute upper portion. Engagement with the stack is released to permit the stack to drop into the chute lower portion.

The apparatus and method may be adapted for placing containers in an essentially vertical chute, where the rows of containers are laid out on a horizontal support at approximately waist level to facilitate the operator's positioning of the row of stacked containers on the support. The support may be movable to and away from registration with the guide means for guiding the stack of containers through container chute entrance. The movement of the support to and from registration permits a positioning of the support away from the chute area at a more convenient location to facilitate positioning of stacks of containers on the support.

Locating the entrance to the chute along its side and spaced above the bottom of the chute, provides a reserve of containers beneath the container side entrance. Thus, a supply for the filling machine is maintained while loading of a new stack of containers in the chute. When the stack is dropped into the chute lower portion, the supply is replenished and maintained for the filling machine during its continuous operation.

The apparatus may also be controlled so as to sense when the supply of container stacks in the chutes is approaching a lower limit to actuate a device which pushes a supported stack of containers into the chute to replenish the supply. In combination with this, the support may be movable so that, on removal of containers from the support, it is moved to another location for reloading of containers and either it or an additional set of already loaded stack of containers moves into alignment with the chutes preparatory to being pushed into the chutes upon demand for more containers.

The conveyor system for supporting the rows of containers, which have been stored in a bag, comprises a conveyor having a plurality of evenly spaced-apart parallel rods mounted on a carrier which moves the rods to and away from a container stack discharge area. The spacing between adjacent rods is such to support a stack of containers on its side. Container retaining means is provided along a side of the conveyor and which extends the length of a set of rods for receiving a predetermined number of rows of stacked containers in a bag. The retaining means defines an opening sufficiently large to permit a bag storing stacks of containers to pass therethrough and being less than the container width to be placed on the conveyor.

The arrangement is such that the bag having a plurality of rows of stacked containers may be placed on the rods with rows of stacked containers placed between the rods. An open end of the bag is remote from the retaining means which retains the rows of containers between the rods as such bag is removed through the opening.

The apparatus, according to this invention, may be arranged so as to place the support for the stacked containers at waist level to facilitate positioning of rows of containers on the support and visual inspection of loading containers into the chutes. There is less chance of accidentally dropping stacks of containers and handling of the containers is reduced to minimize the chance of the operator contaminating any of the containers. The apparatus may be controlled to synchronize the various operations of the apparatus in assuring a constant supply of containers for a filling machine or other apparatus which requires a supply of containers.

The apparatus and method may be adapted to supply any number of rows of containers as would be required by the number of supply chutes for the machine, such as a coffee creamer filling machine or the like.

Preferred embodiments of the apparatus, according to the invention, are shown in the drawings wherein:

Figure 1 is a perspective view of a preferred embodiment of the apparatus for loading stacks of containers into vertical chutes;

Figure 2 is a top plan view of the apparatus of Figure 1;

Figure 3 is a side elevation of the apparatus of Figure 1 showing the pusher device in position to push a plurality of rows of containers into the chute;

Figure 4 is an isometric view of a portion of the drive for container stack pusher device;

Figure 5 shows the pusher device pushing stacks of containers up into the chutes;

Figures 6, 7 and 8 are end views of the apparatus of Figure 1 showing in sequence the pushing of the stack of containers up into container chutes;

Figure 9 shows in more detail a portion of the apparatus of Figure 1 at which stacks of containers are laid on the conveyor;

Figure 10 is a section through Figure 9 showing the relationship of door to housing for container stack conveyor system; and

Figure 11 is a schematic of representative circuitry for controlling various functions of the apparatus.

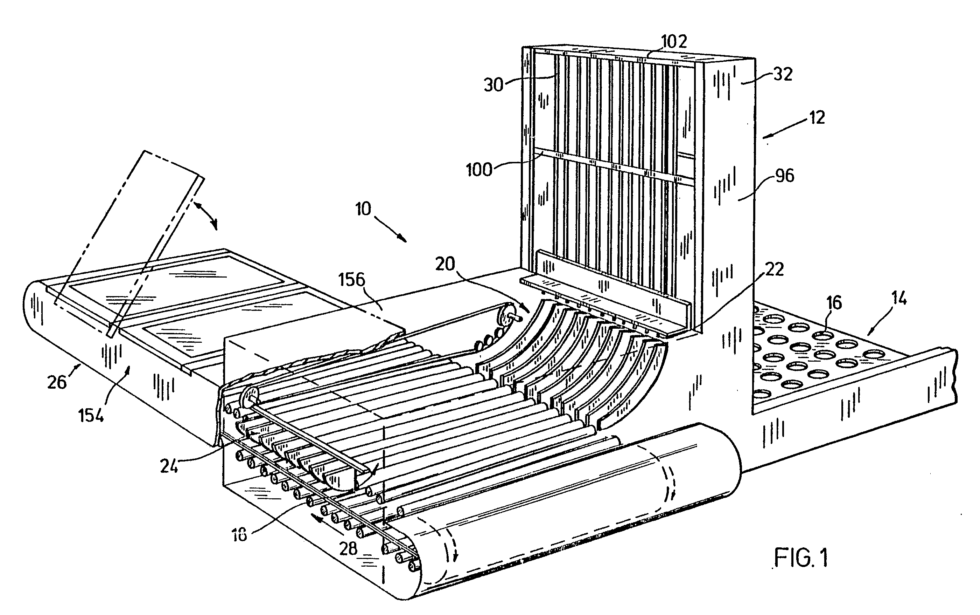

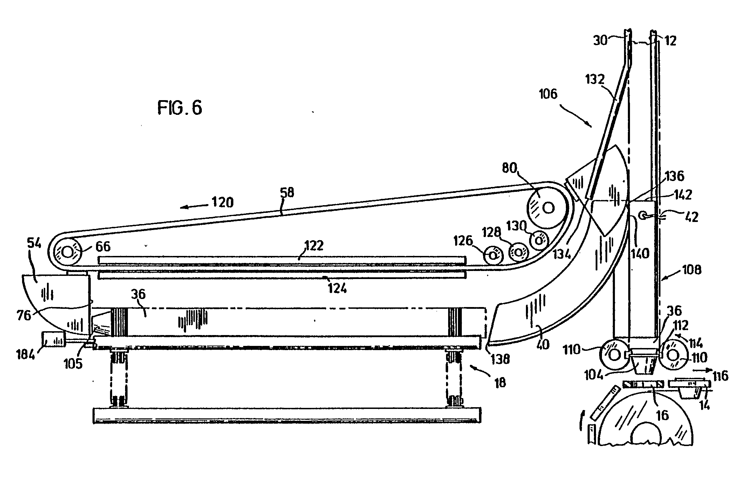

The apparatus 10, as shown in Figure 1 of the drawings, has been adapted for use with a container filling machine. A plurality of chutes 12 are disposed above a conveyor 14. A device 110, as shown in Figure 6, is located at the base of the chutes 12 to dispense containers one at a time from the chutes and place them in the apertures 16 of the conveyor 14.

A support 18 is provided for supporting a plurality of rows of stacked containers on their sides. The containers are pushed, as guided by guide devices 20, up into the chutes 12 by entering through container side entrances 22 into the chute 12. According to this embodiment, the means for pushing is a pusher device 24 which is provided to push the supported rows of stacked containers up into the chutes 12. Remote from the area where the containers are discharged from the conveyor, is a station generally designated 26 at which containers may be loaded onto the support in rows parallel to one another.

The conveyor 18 is movable in the direction of arrow 28 to convey a set of rows of containers loaded onto said conveyor into registration with the guide devices 20. Thus, the rows of containers may be loaded at a convenient location 26 which is spaced from the discharge area. The operation of the pushing device 24 is controlled so as not to commence passing over the conveyor should the conveyor be moving, thereby avoiding any interference with conveyed stacks of containers.

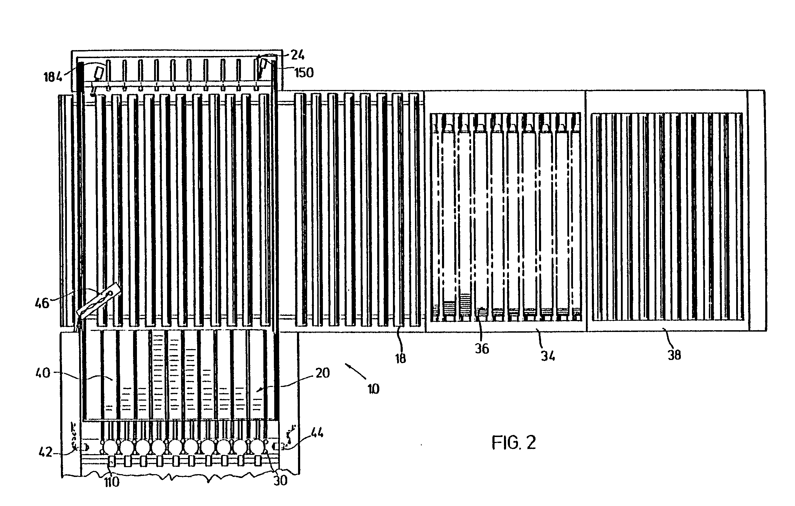

The chutes 12, according to this embodiment, have an upper portion, as shown in Figure 1, which is made up of a plurality of members in the form of rods 30, which are secured to the frame 32 so as to position four rods in a manner which defines the outline of the chute for confining a stack of containers therein. The rod portions for the upper chute portion 30 extend upwardly to the upper frame from container side entrance 22. As shown more clearly in Figure 2, the rods 30 are located so that a pair of rods define mutual sides for two adjacent chutes in the manner shown.

In operation of the apparatus 10, the cover door 34 is opened to permit placement of a plurality of spaced-apart parallel rows of containers 36 on conveyor 18. Similarly, door 38 may be opened to place another set of containers on the conveyor bed 18. The conveyor bed 18 is moved to place the set of containers 36 in register with the guide devices 20. The guide devices 20 comprise a plurality of ramps 40 which are U-shaped in cross-section and curve upwardly from the conveyor bed to the container side entrances from the chutes 12.

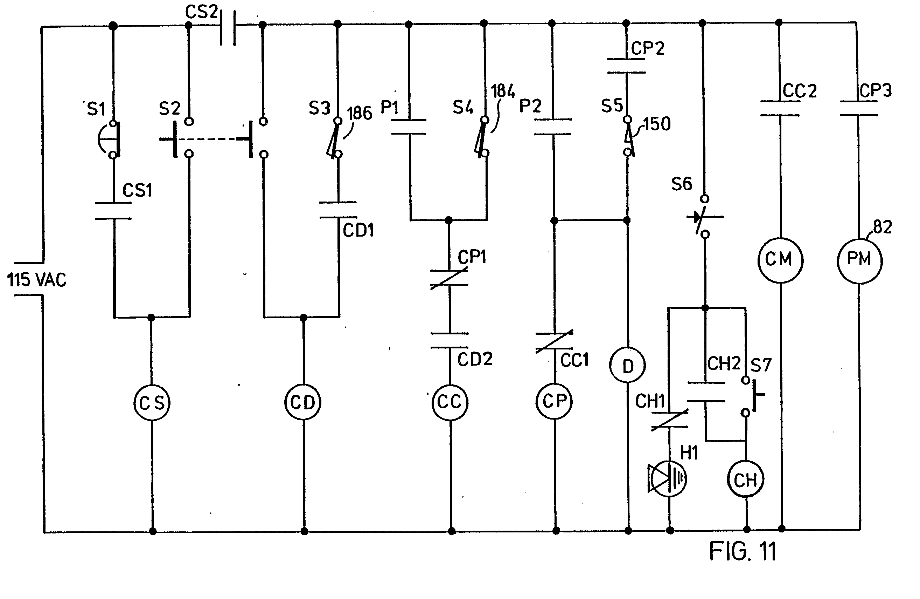

According to this embodiment, ten rows of stacked containers are placed in the chutes 12 at the same time. Photoelectric sensor 42 has a beam of light directed onto it by light source 44. The sensor 42 is positioned, according to this embodiment, at a level in the chute beneath the side entrance opening. On sensing the light from source 44, it causes the pusher device 24 to be activated and push a set of rows of stacked containers upwardly into chutes 12 and then permit it to drop to the bottom of the chutes 12, should there be no containers in the chutes. A photoelectric sensor 46 is provided to detect the presence of sets of rows of stacked containers on the conveyor 18. After the set has been removed by the pusher 24, and sensor 46 no longer detects the presence of containers, the conveyor 18 is moved to position another set of rows of stacked containers in registration with the guide devices 20, where sensor 46 on detecting the first row in the set stops the conveyor in the registered position. Details of the operation of the electrical circuitry in controlling these aspects of the drives for the conveyors and pushers will be described in more detail with reference to Figure 11.

With the arrangement of Figure 2, it is possible to provide four sets of stacks of containers 36 on the conveyor 18. It is appreciated, however, that depending upon the requirements of the system, the conveyor bed 18 may be extended to provide additional set-up areas for the rows of containers on the conveyor. It is also appreciated that the conveyor may be extended to provide sets of container stacks to a plurality of machines which are spaced along conveyor container discharge area.

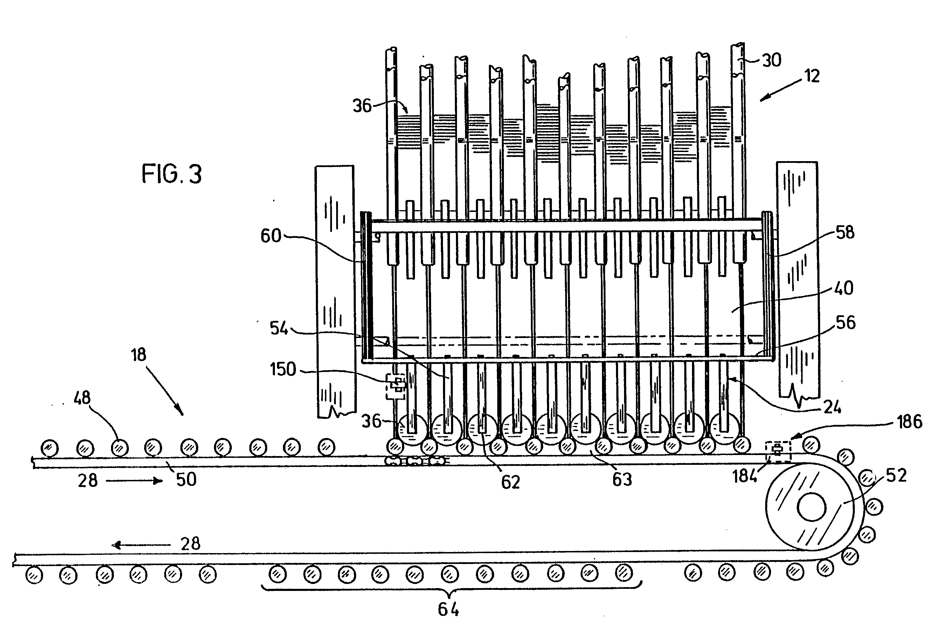

As shown in Figure 3, according to a preferred embodiment, the conveyor bed 18 comprises a plurality of members in the form of rods 48 which are spaced apart and parallel to one another. The rods are connected proximate each end to a carrier which, according to this embodiment, are closed chains 50. The spaced-apart chains 50 are trained about sprockets 52 which are positioned to define an essentially horizontal conveyor bed 18. Circular rods are used as the elongate members of the conveyor bed in this embodiment, since they readily support, due to a desired spacing therebetween, the stacks of round containers 36 on their sides. According to the positioning shown in Figure 3, the containers 36, as supported by the rods 48, are in register with the ramps 40 for guiding the movement of the stacks of containers upwardly into the chutes 12, defined by the rods 30. In the chutes 12, there may be slightly varying levels of the container stacks 36, which is primarily due to a small difference in the number of containers in each row as they are placed in the chutes.

The pusher device 24 comprises a transport means on which a plurality of plates 54 are mounted. The transport means comprises closed chains 58 and 60 which are trained about sprockets to define the path of travel of the pusher means 24. A member 56 spans and is connected to the spaced-apart chains. According to this embodiment, the lower edges 62 of the pusher plates 54 contact the container stacks 36 at approximately their mid-portions, so that the lower edges of the plates clear the conveyor rods 48.

The spacing between the rods 48 is such to support the rows without the stacks falling between the rods; however, not to support them too high so that as the conveyor moves, the stacks remain in the respective spaces 63 between adjacent rods of the conveyor. According to this embodiment, the conveyor is always moved in the direction of arrow 28 to bring into register with the guide ramps 40 another set of rows of stacked containers to be pushed up into the chutes. The sets of rods as generally designated 64 are returned to the set-up station by travelling underneath the upper surface of the conveyor bed 18.

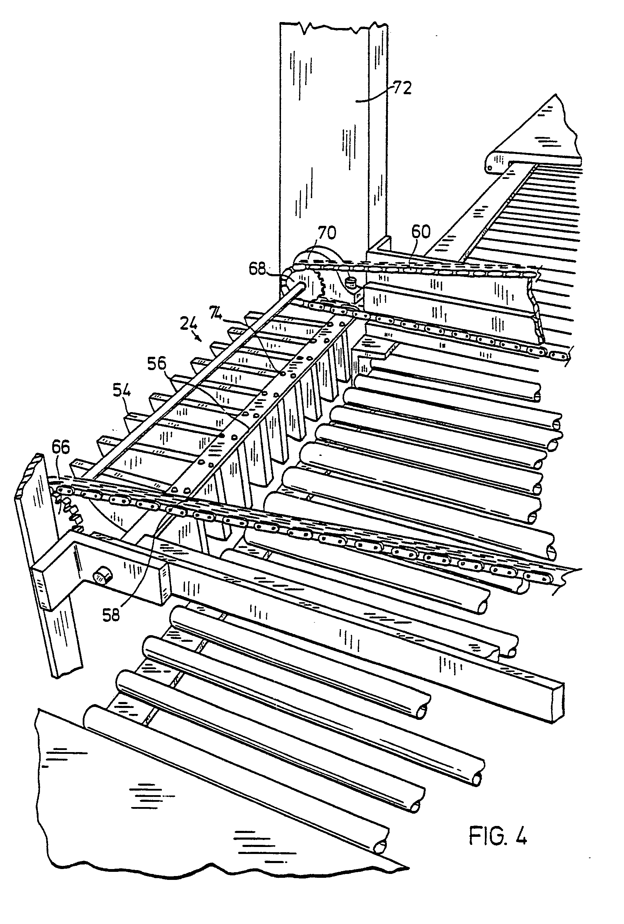

Further details of the pusher assembly 24 are shown in Figure 4, where the chains 58 and 60 are trained about sprockets 66 and 68 which are mounted in bearings 70, secured to support columns 72. The pusher plates 54 are secured to member 56 by screws 74. The member 56 is, in turn, connected to links of the chains 58 and 60. The positioning of the bearing 70 is such to locate the bottom portion 62 of the plate 54 at the level shown in Figure 3 relative to the conveyor 18.

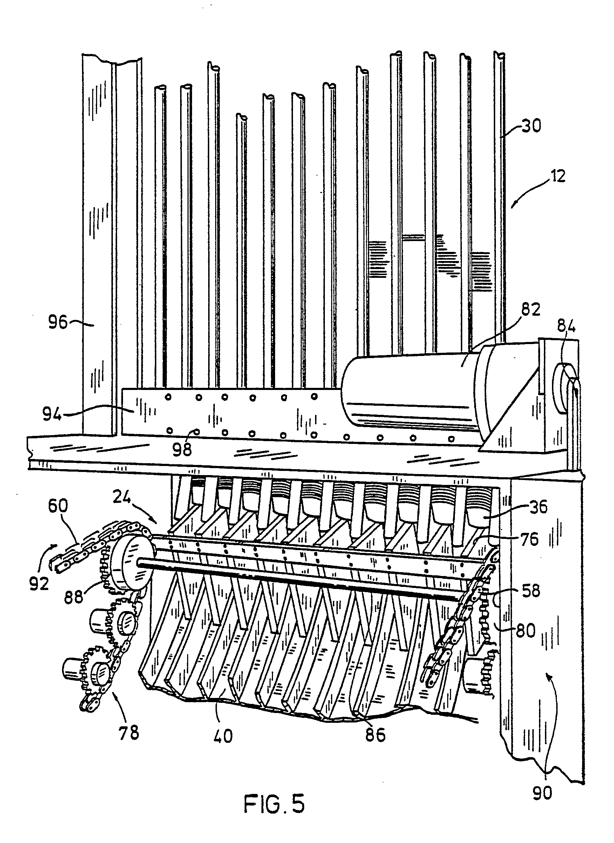

As shown in Figure 5, the pusher device 24 is pushing a plurality of stacks of containers 36 into the chutes 12, where the face portions 76 of the pusher plates 54 are about to disengage or move out of contact with the bottom containers of the stacks 36. In so doing, the stacks, as now located in the chutes, are free to drop and seek the level of containers which may remain in the respective chutes. A sprocket arrangement generally designated 78 is provided to define the path along which the pusher device 24 travels as it pushes the rows of containers up over curved ramps 40 into the chutes 12. The sprockets 80 and 88 of the transport means, as they engage chains 58 and 60, are driven by an electric motor 82 via chain 84 which engages a sprocket secured to shaft 86 and to which sprockets 80 and 88 are also secured. The sprockets 80 and 88 are supported by end-frames 90 and 92 of the apparatus.

Further details of the mounting of the rods 30, which define the upper portions of the chutes, are shown in Figure 5. L-shaped plate 94, which is secured to frame uprights 96, provides support for the lower end of the rods 30. Each rod is fastened to the upright portion of plate 94 by bolts 98. Also as shown in Figure 1, additional support for the rods is provided by cross-bars 100 which are secured to the rods and the rods may be additionally secured to top plate 102 of the frame for the chutes 12.

Turning to Figure 6, further details of the apparatus for pushing a stack of containers 36 into chute 12 is shown. Considering for the moment a single stack 36, aligned or registered with a ramp 40, a single pusher plate 54 is in position adjacent the bottom container 105 in readiness to contact same and commence pushing of the stack 36 toward the ramp 40. The conveyor 18 is horizontally disposed and upon the photoelectric detector 42 detecting a low level of containers in the chute lower portion 108, the pusher 54 is actuated. The chute 12, as more clearly shown in Figure 6, has the upper portion above the container side entrance generally designated 106 and a lower tube portion generally designated 108 beneath the container side entrance. In this embodiment, the stack of containers 36 is held in the chute 12 by dispensing wheels 110, having notches 112, such that when rotated in the direction of arrow 114 removes a single container 104 at a time from the stack and places it in the appropriate aperture 16 of the filling conveyor 1 moving in the direction of arrow 116.

Thus, the lower portion 108 of the chute 12 provides a reserve of stacked containers such that the filling conveyor 14 and dispenser 110 may continue to operate to place containers in the conveyor, while a fresh supply of stacked containers is being placed in the chute 12. Upon sensor 42 causing actuation of the drive motor 82, the closed chains 58, 60 are moved in the direction of arrow 120. This causes face portion 76 of pusher plate 54 to contact container 105 and push the stack 36 towards the curved ramp 40. Because the containers are stacked and, in this instance, are fairly shallow, the ramp 40 may have a relatively small radius of curvature for transferring the containers from the horizontal plane of the conveyor into the vertical plane of the chute 12. Since the containers are being pushed upwardly, the ordered stacked arrangement of the containers is maintained as they are moved upwardly into chute 12. To ensure proper tracking of the pusher plate 54, guide bars 122 and 124 are provided to guide the chains across the span between sprocket 66 and idler sprockets 126, 128 and 130. The purpose of the idler sprockets 126, 128 and 130 is to define a curved portion in the path of the pusher 54, such that it traverses the arc of the smoothly curved ramp 40.

The side container entrance 106 for the chute 12 is provided, in this embodiment, by bars 30 sloping outwardly and downwardly to define correspondingly outwardly and downwardly sloping legs 132. The distal end 134 of each bar is spaced from the upper edge 136 of chute lower portion 108 a distance at least equal to the anticipated diameter of the containers 104 to permit them to pass freely up into the chute 12. The lower edge 138 of the curved ramp 40 is at a level to smoothly receive the pushed stack 36. The upper edge 140 of the ramp is positioned adjacent the upper part 142 of the chute lower portion 108 to provide a smooth transition of the stack up into chute 12. Thus, the upper edge 140 of ramp 40 is positioned beneath the outer downwardly sloping legs 132 of the bars 30 to direct the upwardly moving stack 36 into the chute 12.

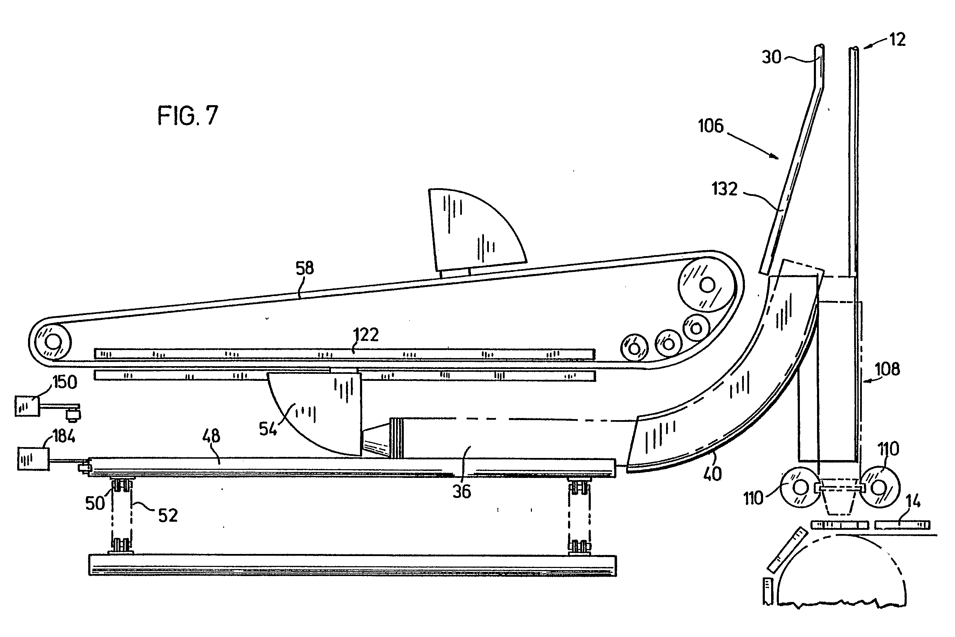

As shown in Figure 7, the movement of the pusher plate 54 has caused the stack 36 to curve upwardly along ramp 40 and commence its entry into the container side entrance 106 beneath legs 132 of the chute bars 30. In the meantime, the stack of containers in the lower chute portion 108 is being dispensed by the dispenser wheel 110 with continued movement of the filler conveyor 14.

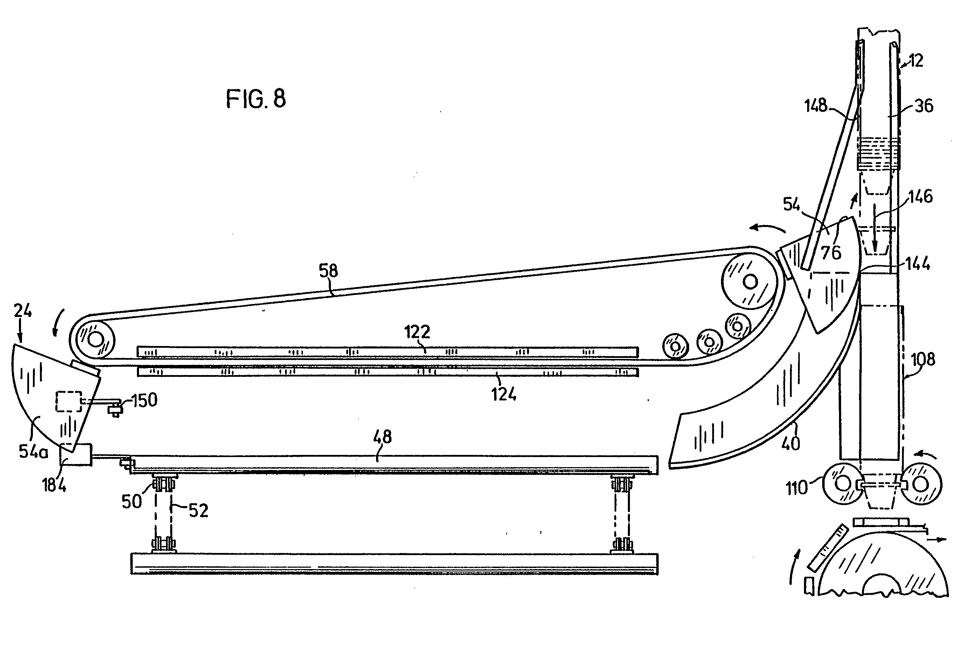

With the continued movement of the pusher drive motor 82, the pusher plate is moved by the side entrance to a position, as shown in Figure 8. At this point, the face portion 76 of the pusher plate has disengaged the stack of containers 36. The arcuate surface 144 of the pusher plate 54 serves to deflect the stack 36 as it drops into the lower portion of the chute 108 in the direction of arrow 146. It can be seen that the arcuate surface 144 is tangential with the imaginary boundary line 148 of the chute 12 to confine the stack to move downwardly into lower portion 108 of the chute. This prevents containers flopping or falling out onto or catching on ramp 40. The arcuate surface 144 is also shaped to avoid the trailing portion of the pusher plate 54 interfering with the curved surface of ramp 40 as the plate moves along this area in pushing the stack 36 up into the chute 12.

Movement of the pusher mechanism 24 is continued until the position for the pusher is at that shown in Figure 6, where pusher plate 54a is approaching that of pusher 54 in Figure 6. To sense this position, a micro-switch 150 is located to be tripped when the plate 54a is at the position shown in Figure 6 to cause a signal which deactuates the drive motor 82 to stop movement of the closed chains 58 and 60. At this position, the arcuate surface 144 of the pusher 54 remains adjacent the chute edge 148 to ensure a continued smooth transfer of the stack 36 down the chute 12 into the lower portion 108.

According to this embodiment, the pusher plates 54 are of a thickness which readily pass between the spaced-apart leg portions 32 of the bars 30. As a result, the pusher plate in a simple manner moves the stack of containers up into the chute and simply disengages therefrom by continued movement through the container side entrance area. At the same time, the depending legs 132 of the chute entrance serve to guide continued upward movement of the stack of containers into the chute 12.

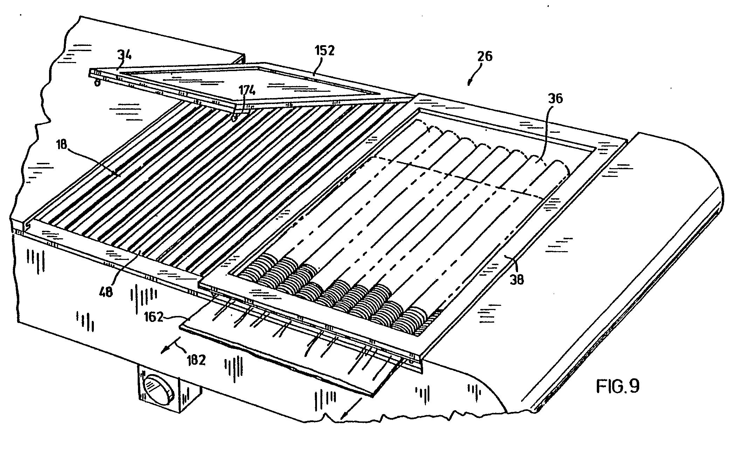

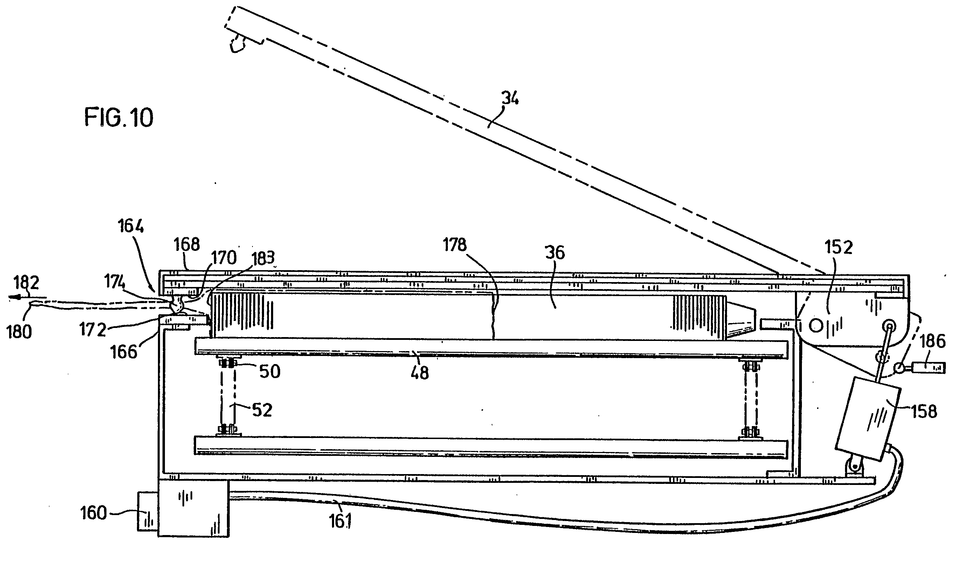

A housing is provided for the conveyor area and container discharge area as designated 154 and 156 in Figure 1. Access to the conveyor bed is provided through the doors 34 and 38 to permit loading of stacks of containers onto the conveyor bed 18 at the remote location. An advantage of this apparatus in pushing containers from a horizontal plane up into the vertical chutes permits positioning of the conveyor bed 18 at waist level for the operator. Referring to Figures 9 and 10, door 34 is opened as it is hinged along side 152 to frame 154. The door 34, as shown in Figure 10, is held opened by actuating an air cylinder 158. The button or control member for air cylinder 158 is provided at 160 and controls the air pressure through the line 161 to air cylinder 158. With the door 34 held in the open position, a bag of stacked containers may be placed on the conveyor bed 18.

As shown in Figure 9, the bag 162 has ten rows of stacked containers 36 held therein. The bag with containers is placed on the conveyor rods 48. By moving the rows about on the rods, the rows seek their spaced-apart parallel aligned position, where there is sufficient fullness in the bag sides to drop into the areas between the bars. Each row is nestled in the space between each adjacent set of rods 48. The door, in this instance 38, is closed where, as shown in Figure 10, a device 164 for holding or retaining the stacks on the conveyor is provided as defined between the housing portion 166 and the door free end 168. In this particular embodiment, the lower edge 170 of the door and the upper edge 172 of the housing define the upper and lower edges of the opening through which the bag is withdrawn. Due to the weight of the door, a pair of feet 174 are provided at the door free edge to space edges 170 and 172 apart to define the stack retaining device 164. With the open end of the bag 178 located remotely of stack retainer 164, the closed end 180 of the bag 178 is withdrawn through the opening in the direction of arrow 182. The inner edge 172 of the housing stops the containers from moving outwardly through the opening which is appreciably smaller than the diameter of the containers, yet sufficiently large to allow the bag 162 to be pulled out from the conveyor bed area in the direction of arrow 182. In so doing, the stacks of containers have a tendency to ride up stop 172; however, the underside of the door confines such movement to retain the stacks on the conveyor and in position between the bars.

Due to the frictional engagement between the stack of containers 36 and the bag 162, all stacks are pulled towards the edge 172 in the manner shown in Figure 10 to provide an alignment of stack upper edges 183 in the manner shown. With the bag totally removed from the conveyor bed area, all ten stacks of containers 36 are aligned and properly rest on the spaced-apart bars 48 in readiness for movement to the container discharge area beneath the housing 156.

Although this embodiment of the invention is designed to handle stacks of round containers, which may be of the coffee creamer type or single serving yogurt type, it is possible that other stacks of containers may be handled such as square or rectangular containers. Thus, different shapes for the conveyor rods may be needed dependent upon the shape of containers to be laid on the conveyor. These elongate rods may be T-shaped for example, should it be desired to handle square forms of containers with the ramps 40 as the guide means formed accordingly and with corresponding change in the chute confinement bars 30 to properly receive and confine such form of containers.

As shown in Figure 6, a level of container stacks in the chute 12 is provided in chute lower portions 108. A photoelectric cell 42 emits a signal when the level of the stacks drops below the level of the photocell in the chute lower portions 108. The number of containers remaining in the lower portion of the chute 108, when the photocell actuates the pusher drive motor, is predetermined to be sufficient to enable continued operation of the filling conveyor 14 while a new supply of stacks of containers are loaded into the chute and dropped in the lower portion 108.

Various approaches may be taken in controlling the drive motors for the conveyor supporting the stacks of containers and the motor for moving the pusher plates or paddles 54. As part of the electrical circuit components, photocell 42 senses a level of containers in the chute, while photocell 46, as shown in Figure 2, senses the presence of stacked containers on the conveyor. In determining the position of the paddles or pushers, micro-switch 150 is contacted to stop pusher movement at the position shown in Figure 6. As to conveyor movement and for the particular setup for the electrical control of the conveyor, a micro-switch 184 is contacted intermittently by the bars of the conveyor. This micro-switch works in conjunction with the photoelectric cell 46 in a manner to be discussed in determining conveyor movement. In addition, a safety micro-switch 186 is located on each door which is actuated when the door is opened to prevent conveyor movement and thus avoid injury to the operator when loading stacks of containers onto the conveyor.

Referring to Figure 11, standard notation is used for identifying the various components of the control circuitry. For purposes of description, micro-switch S3 is switch 186 on the door, as shown in Figure 10. Micro-switch S4 is the micro-switch 184 on the conveyor, as shown in Figure 2. Micro-switch S5 is switch 150 which senses pusher location, as shown in Figures 2 and 6. Photocell 42 in the chute is P2 and photocell 46 on the conveyor is P1. The conveyor motor, not shown in the previous drawings, is designated CM and the pusher motor 82, as shown in Figure 5, is designated PM. The control circuitry functions as follows.

The control circuitry, the conveyor motor CM and pusher motor PM are powered by 115 volts alternating current. Power is supplied to the control circuitry by momentarily closing the reset switch S2, thereby causing the contactor coil CS to be energized. This closes contacts CS1 and CS2. After the reset switch S2 is opened, the contactor coil is kept energized by current flowing through the emergency stop switch S1, which is normally closed, and contact CS1. If the emergency stop switch S1 is momentarily opened, contactor coil CS is de-energized and contacts CS1 and CS2 are opened.

Momentarily closing the reset switch S2 also causes contactor coil CD to be energized and it is kept energized by current flowing through the safety switch S3 for the door which is closed when the door is closed. If the door is opened, this opens switch S3, thus contactor coil, CD is de-energized, thereby opening contacts CD1 and CD2 which prevents the conveyor motor CM from running. When the door is closed, contactor coil CD is re-energized by momentarily closing reset switch S2.

Photoelectric cell P1 is closed if its light beam is unobstructed. Micro-switch S4, which is open when the conveyor motor is off, is closed by pressure on its arm, caused by a rod of the conveyor striking the arm. Contact CP1, which is open when the pusher motor is running, prevents the conveyor motor from running when the pusher motor is on. Contact CD2 is closed if the door is closed and the reset switch has been momentarily closed. The absence of containers in row one of the conveyor causes photoelectric switch P1 to close and if contacts CP1 and CD2 are closed, the contactor coil CC is energized, thereby closing contact CC2 which starts the conveyor motor CM running. The bars on the conveyor will obstruct the light flow on photoelectric switch P1, but during this time, micro-switch S4 is closed, thereby maintaining the energization of contactor coil CC. Finally, when new containers of the first row on the conveyor obstruct the light flow of photoelectric switch P1 and micro-switch S4 is open, due to arm being located in the space between the bars, as shown at 186 in Figure 3, contactor coil CC is de-energized, thereby stopping the conveyor motor CM.

Photoelectric switch P2 is closed when the containers in the chutes reach a low level and the light pass is unobstructed. If conveyor motor CM is not running, contact CC1 will be closed and the contactor coil CP will be energized, thereby closing contact CP2 and contact CP3 which start the pusher motor PM running. After the new containers are deposited in the chute 12, photoelectric switch P2 will open, but contactor coil CP is kept energized by current flowing through the closed contact CP2 and micro-switch S5 which is normally closed. When the opposite pusher plate 54a of Figure 8 opens micro-switch S5, the contactor coil CP is de-energized, thereby opening contact CP2 and CP3 which stops the pusher motor CM.

In the event that no new containers were deposited in the chute, photoelectric switch P2 will stay closed and the contactor coil CP will not be de-energized by the opening of micro-switch S5. The timer mechanism D will sense the increased time that contactor coil CP is energized, and will close switch S6. The closing of switch S6 will cause the horn H1 to sound and will alert the operator that no new containers were deposited in the chute. If the operator momentarily closes switch S7, contactor coil CH will be energized, thereby closing contact CH2 which silences the alarm. The operator will then hit the emergency stop switch S1, refill the conveyor, and then restart the cycle by momentarily depressing the reset switch S2.

With this control circuitry, an operator is able to load onto the conveyor at least two sets of rows of containers and then leave the machine unattended until the last set moves within the covered housing area for the conveyor. During that time, the operator is free to attend to other functions about the machine. Assuming that the filling machine is operating at a capacity of 1,000 containers per minute, it may be possible for the operator, having two loading stations, to load onto the conveyor a total of 3,500 containers per set, which is 7,000 containers in total. Thus, the operator has something less than seven minutes which he can spend on other functions of the machine without attending to reloading additional containers onto the conveyor. Should a set of containers be missed in reloading the conveyor, as is apparent from the description of the circuitry, the conveyor will continue to move until the first row of the next set is sensed by the photoelectric cell P1 which then stops the conveyor motor. Adjustment of the photoelectric sensor position 46 is permitted so that the conveyor motor is stopped at the point which registers the rows of containers with the ramps 40. In view of the time delay for pushed stacks of containers to ride up the ramps into the chutes after the lower predetermined level of containers stacks beneath container side entrance has been sensed, it is appreciated that the sensed lower level may also be above the side entrance. The extent of the sensed lower container level above the side entrance would be selected, such that the stack levels in the chutes would be below the side entrances as the pushed new stacks of containers began entering the chutes.

The housing 154 for the container discharge station and conveyor may be in communication with another housing, not shown, which would encase the filling station over conveyor 14. A supply of air may be forced into the filling station housing and with the chute area enclosed and the bottom area of the conveyor closed, a positive pressure of air may be developed in the housing for the conveyor and container discharge area and in the chutes to ensure that outside air does not enter the housing to contaminate the containers which are about to be filled. In addition, this form of loading reduces contact of operator with the containers, since the containers remain in the bag when loaded onto the conveyor. Thus, the operator never needs to touch the containers.

Although the preferred embodiment of the invention has been described with respect to supplying creamer containers to a creamer filling machine, it is appreciated that the container loading machine may be put to other uses in supplying or placing stacks of containers in chutes. It is appreciated that the support area for the container stacks may not always be horizontal; however, it should support the stacks on their sides and further the chute for receiving the containers may not always be absolutely vertical, but may be slanted. An instance where it may be desirable to slant the conveyor downwardly away from horizontal is to reduce the curvature of the guide ramp and, thus, reduce the extent of the curve induced in the stacks as they are pushed upwardly into the chutes. It is appreciated that with a conveyor slanted in this manner, the retaining means would be located along the lower side of the conveyor to permit withdrawal of the bag away from the containers with consequent location of the stacks on the conveyor bed.

## Claims

1. An apparatus (10) for loading a stack of containers (36) into a container chute (12) which includes means (18) for supporting a row of stacked containers (36) on its side, characterized in that said chute (12) has a container side entrance (22) spaced above the bottom of and below the top of said chute (12) to define upper and lower chute portions (106, 108), said upper chute portion (106) being of a height to receive a row of stacked containers (36), means (20) for guiding pushed movement of a stack of containers (36) from said support means (18) through said container side entrance (22), means (24) for pushing a stack of containers (36) along said support means (18) and guide means (20) upwardly into said chute upper portion (106) and releasing contact with such stack (36) located in said chute upper portion (106) to permit such stack to drop past said entrance (22) into said chute lower portion (108).

2. An apparatus of Claim 1, characterized in that said support means (18), as it supports a stack of containers (36), is movable into and out of alignment with said guide means (20).

3. An apparatus of Claim 1, characterized in that said chute (12) is upright.

4. An apparatus of Claim 3, characterized in that said support means (18) is essentially horizontal, said guide means (20) being a curved ramp (40) to direct the pushed movement of a stack of containers (36) into said chute upper portion (106).

5. An apparatus of Claim 4, characterized in that said pusher means (24) is located above and is adapted to travel along said support means (18) and follow the upward curvature of said ramp (40), and move past said side entrance (22) of said chute (12) to thereby release contact with such stack of containers (36) to permit it to drop.

6. An apparatus of Claim 5, characterized in that the upper portion (106) of said chute (12) above said lower portion (108) is defined by a plurality of upwardly extending spaced-apart bars (30) adapted to confine a stack of containers (36), a pair of spaced-apart bars (30) extending downwardly and outwardly away from said chute (12) to define said side entrance (22) into said chute (12).

7. An apparatus of Claim 6, characterized in that said pusher means (24) is driven by a drive (82) which, when actuated, moves said pusher means (24) above and along said support means (18), said curved ramp (40) and by said side entrance (22).

8. An apparatus of Claim 7, further characterized in that said pusher means (24) comprises a plate (54) mounted on a transport means (56, 58, 60) which is driven by said drive (82), said plate (54) presenting a said face portion (76) and is of a width to move between said spaced-apart bars (30) as said driven transport means (56, 58, 60) moves said plate (54) by said side entrance (22).

9. An apparatus of Claim 8, characterized in that said plate (54) has an arcuate surface (144) extending rearwardly of said face portion (76), said arcuate face (144) ensuring that such stack of containers (36) drop into said lower portion (108) of the chute (12) by preventing containers (36) from catching at said side entrance (22) while dropping into said chute lower portion (108).

10. An apparatus of Claim 9, characterized in that said drive (82, 150) is controlled to stop movement of said plate (54) with said arcuate surface (144) located inwardly of said spaced-apart bars (30) and positioned at the interior of said chute (12) to prevent containers (36) falling out of said side entrance (22).

11. An apparatus of Claim 4, further characterized in that it is adapted for use with a container filling machine, a device (110) located at the base of said chute (108) to withdraw containers (36) one at a time from such stack, sensor means (42, 44) for detecting when level of containers (36) is at a predetermined level and causing a signal, a drive (82) and control (CP) therefor which moves said pusher means (24), said control (CP) on receiving a signal from said sensor means (42, 44) actuating said drive (82) to push another stack of containers (36) on said support means (18) into said chute (12) thereby maintaining a constant supply of containers (36) to be withdrawn from said chute lower portion (108) by said device (110) for subsequent filling.

12. An apparatus of Claim 4, characterized in that said chute lower portion (108) is a tube of a diameter to receive a stack of containers (36), means (110) provided at tube bottom to prevent containers (36) of such stack falling freely from said tube, above said tube are four equally spaced-apart mounted rods (30) which define an upward continuation of said tube (108) to constitute said chute upper portion (106) and thereby confine a stack of containers within said rods (30), an adjacent pair of said rods sloping outwardly and downwardly away from chute interior to define said side entrance above said tube, said sloping pair of rods guiding a pushed stack of containers (36) upwardly into said chute upper portion (106) to permit a portion of such stack of containers to drop into said tube (108).

13. An apparatus of Claim 1 for loading a plurality of stacks of containers (36) into a corresponding plurality of chutes (12), further characterized in that said support means (18) supports a plurality of spaced-apart rows of stacked containers (36) on their sides and a plurality of said guide means guide (20) each aligned supported row of stacked containers through respective chute side entrance (22) into corresponding chutes (12).

14. An apparatus of Claim 13, characterized in that said support means (18), as it supports a plurality of stacks of containers (36), is movable into and out of operative alignment with said guide means (20).

15. An apparatus of Claim 14, characterized in that said support means (18) comprises a conveyor having a plurality of horizontal parallel spaced-apart rods (48) of predetermined spacing to support between pairs of rods a desired number of parallel rows of container stacks (36), said conveyor being movable to said operative position which aligns each row of containers (36) with respective guiding ramps (40), after removal of the stacks of containers (36) from the support means (18), the conveyor is movable to another location away from the guide ramps (40) for loading essentially simultaneously another plurality of stacks of containers (36) onto said support means (18).

16. An apparatus of Claim 1, characterized in that a conveying apparatus (18) conveys a plurality of rows of stacked containers (36) which have been stacked in a bag (162), said conveying apparatus comprises a conveyor having a plurality of evenly spaced-apart parallel rods (48) mounted on a carrier (50) which moves said rods (48) to and away from container stack discharge areas, the spacing between adjacent rods (48) being such to support a stack of containers (36) on its side, container retainer means (164) provided along a side of said conveyor and which extends the length of a plurality of rods (48) for receiving a predetermined number of rows of stacked containers (36) in a bag (162), said container retainer means (164) defining an opening sufficiently large to permit a bag storing stacks of containers (36) to pass therethrough and being less than container width to be placed on said conveyor, the arrangement being such that a bag having a plurality of rows of stacked containers (36) may be placed on said rods (48) with rows of stacked containers (36) placed between said rods (48), an open end of such bag being remote from said retainer means (164), said retainer means (164) retaining such rows of containers (36) between said rods (48) as such bag is removed through said opening (170, 172).

17. An apparatus of Claim 16, characterized in that a housing (166) is provided for said conveyor, access to the upper surface of said conveyor being provided by a hinged door (34, 38), said door (34, 36) being hinged to said housing (166), said housing (166), defining a bottom edge (172) of said opening (170, 172) and the free end (170) of said door (34, 38) when closed defines an upper edge of said opening, said bottom edge (172) retaining container stacks on said conveyor while the underside of said door contains stacks of containers (36) against said bottom edge (172) as the bag (162) is withdrawn.

18. A method for loading a stack of containers (36) into a chute (12) comprising supporting a stack of containers (36) in a row on its side near said chute (12), said chute having a container side entrance (22) spaced above the bottom of and below the top of said chute (12), pushing a row of supported stacked containers (36) towards said container entrance (22), guiding such movement of the stack through said entrance (22) upwardly into said chute (12), releasing engagement with said stack and permitting it to drop in said chute past said side entrance (22).

19. A method of Claim 18, adapted to load a plurality of rows of stacked containers (36) into a corresponding plurality of chutes (12) and holding said stacks of containers (36) in said chutes (12) and withdrawing from the base of each chute (12) one container at a time, said method comprising supporting on a support (18) a plurality of rows of stacked containers (36) on their sides, said rows being evenly spaced apart, parallel with one another and registered with respective said container side entrances, pushing all of said plurality of rows at once and guiding them through said side entrances (22) upwardly into said chutes (12) and permitting them to drop into respective said chute lower portions.

20. A method of Claim 19, comprising moving said supported rows of stacked containers (36) into registration with said chutes (12) and moving said support (18) away to a location for loading another set of rows of stacked containers (36) onto said support.

21. A method of Claim 19, comprising supporting several sets of rows of stacked containers (36) on a movable support (18), moving a set of rows of stacked containers (36) into registration with respective said container side entrances (22), sensing when level of stacks of containers is below said container side entrances (22) and pushing all aligned supported sets of rows of stacked containers (36) into respective said chutes (12) and moving another support set of rows of stacked containers (36) into registration with said chutes (12).

**Revendications**

1. Un appareil (10) pour charger une pile de récipients (36) dans une goulotte à récipients (12), qui comprend des moyens (18) pour supporter une rangée de récipients empilés (36) sur son côté, caractérisé en ce que ladite goulotte (12) a une entrée latérale de récipients (22) espacée au-dessus de la base et au-dessous du sommet de ladite goulotte (12) pour définir des parties supérieure et inférieure de la goulotte (106, 108), ladite partie supérieure (106) de la goulotte ayant une hauteur appropriée pour recevoir une rangée de récipients empilés (36), des moyens (20) pour guider le déplacement poussé d'une pile de récipients (36) à partir des moyens supports (18) à travers l'entrée latérale (22) des récipients, des moyens (24) pour pousser une pile de récipients (36) le long desdits moyens supports (18) et le long des moyens de guidage (20) vers le haut, dans ladite partie supérieure (106) de la goulotte et se dégager du contact avec cette pile (36) placée dans ladite partie supérieure (106), de la goulotte pour laisser ladite pile tomber au-delà de l'entrée (22) dans ladite partie inférieure (108) de la goulotte.

2. Un appareil selon la revendication 1, caractérisé en ce que les moyens supports (18), lorsqu'ils supportent une pile de récipients (36), peuvent être déplacés en alignement et hors d'alignement avec les moyens de guidage (20).

3. Un appareil selon la revendication 1, caractérisé en ce que la goulotte (12) est verticale.

4. Un appareil selon la revendication 3, caractérisé en ce que les moyens supports (18) sont à peu près horizontaux, les moyens de guidage (20) étant une rampe courbe (40) pour diriger le déplacement poussé d'une pile de récipients (36) dans ladite partie supérieure (106) de la goulotte.

5. Un appareil selon la revendication 4, caractérisé en ce que le dispositif pousseur (24) est placé au-dessus des moyens supports (18) et adapté pour circuler le long de ces moyens supports, suivre la courbure ascendante de la rampe (40) et franchir l'entrée latérale (22) de ladite goulotte (12), pour se dégager ainsi du contact avec ladite pile de récipients (36) et permettre à cette dernière de tomber.

6. Un appareil selon la revendication 5, caractérisé en ce que la partie supérieure (106) de ladite goulotte (12), située au-dessus de la partie inférieure (108), est définie par un certain nombre de barres espacées (30) qui s'étendent verticalement pour entourer un site de récipients (36), une paire de barres espacées (30) s'étendant vers le bas et vers l'extérieur en s'éloignant de ladite goulotte (12) pour délimiter l'entrée latérale (22) dans cette goulotte (12).

7. Un appareil selon la revendication 6, caractérisé en ce que le dispositif pousseur (24) est entraîné par un moteur (82) qui, lorsqu'il est actionné, déplace ce dispositif pousseur (24) au-dessus et le long des moyens supports (18), de la rampe courbe (40) et par l'entrée latérale (22).

8. Un appareil selon la revendication 7, caractérisé en outre en ce que le dispositif pousseur (24) comprend une plaque (54) montée sur des moyens de transport (56, 58, 60) qui sont entraînés par ledit moteur (82), cette plaque (54) présentant ladite face (76) et ayant une largeur appropriée pour se déplacer entre les barres espacées (30) lorsque lesdits moyens de transport entraînés (56, 58, 60) font passer ladite plaque (54) par l'entrée latérale (22).

9. Un appareil selon la revendication 8, caractérisé en ce que ladite plaque (54) présente une surface courbe (144) qu s'étend en arrière de ladite face (76), cette face courbe (144) assurant que ladite pile de récipients (36) tombe dans ladite partie inférieure (108) de la goulotte (12) en empêchant les récipients (36) de s'accrocher à ladite entrée latérale (22) pendant qu'ils tombent dans cette partie inférieure (108) de la goulotte.

10. Un appareil selon la revendication 9, caractérisé en ce que le moteur (82, 150) est commandé de manière à arrêter le mouvement de la plaque (54) lorsque la surface courbe (144) est placée à l'intérieur par rapport aux barres espacées (30) et est située à l'intérieur de ladite goulotte (12) pour empêcher les récipients (36) de tomber de ladite entrée latérale (22).

11. Un appareil selon la revendication 4, caractérisé en outre en ce qu'il est adapté pour utiliser avec une machine de remplissage des récipients, un dispositif (110) placé à la base de ladite goulotte (108) pour extraire les récipients (36) un à un de ladite pile, des moyens détecteurs (42, 44) pour détecter le moment où le niveau des récipients (36) se trouve à un niveau prédéterminé et à émettre un signal, un moteur d'entraînement (82) et une commande (CP) pour celui-ci qui met le dispositif pousseur (24) en mouvement, ladite commande (CP) actionnant ledit moteur d'entraînement (82) lorsqu'elle reçoit un signal des moyens détecteurs (42, 44), pour pousser une autre pile de récipients (32) posés sur lesdits moyens supports (18), dans ladite goulotte (12), ce qui maintient une réserve constante de récipients (36) qui peuvent être extraits de la partie inférieure (108) de la goulotte par le dispositif (110) pour être remplis ultérieurement.

12. Un appareil selon la revendication 4, caractérisé en ce que la partie inférieure (108) de la goulotte est un tube d'un diamètre approprié pour recevoir une pile de récipients (36), des moyens (110) sont prévus à la base du tube pour empêcher les récipients (36) de cette pile de tomber librement dudit tube, au-dessus dudit tube, sont montées quatre tringles (30) uniformément espacées qui définissent un prolongement ascendant dudit tube (110) pour constituer la partie supérieure (106) de la goulotte et confiner ainsi une pile de récipients entre lesdites tringles (30), une paire de tringles adjacentes s'inclinant vers l'extérieur et vers le bas en s'éloignant de l'intérieur de la goulotte pour définir ladite entrée latérale au-dessus dudit tube, cette paire de tringles inclinées guidant une pile de récipients (36) qui est poussée vers le haut dans ladite partie supérieure (106) de la goulotte pour permettre à une paire de cette pile de récipients de tomber dans ledit tube (108).

13. Un appareil selon la revendication 1 pour charger un certain nombre de piles de récipients (36) dans un nombre correspondant de goulottes (12), caractérisé en outre en ce que lesdits moyens supports (18) supportent un certain nombre de rangées espacées de récipients empilés (36) couchés et en ce qu'un certain nombre desdits moyens de guidage (20) guident les rangées alignées de récipients empilés dans les goulottes correspondantes (12) chacune à travers l'entrée latérale (22) de goulotte respective.

14. Un appareil selon la revendication 13, caractérisé en ce que lesdits moyens supports (18) lorsqu'ils supportent plusieurs piles de récipients (36) peuvent se déplacer en alignement fonctionnel et hors d'alignement fonctionnel avec lesdits moyens de guidage (20).

15. Un appareil selon la revendication 14, caractérisé en ce que lesdits moyens supports (18) comprennent un transporteur possédant un certain nombre de tringles espacées, horizontales, parallèles (48), placées à un espacement prédéterminé pour supporter entre des paires de tringles un nombre désiré de rangées parallèles de piles de récipients (36), ce transporteur pouvant être amené à ladite position fonctionnelle qui aligne les rangées de récipients (36) sur les rampes de guidage (40) correspondantes, après retrait des piles de récipients (36) des moyens supports (18), le transporteur peut être amené à un autre emplacement éloigné desdites rampes de guidage (40) pour charger à peu près simultanément une autre série de piles de récipients (36) sur lesdits moyens supports (18).

16. Un appareil selon la revendication 1, caractérisé en ce qu'un dispositif transporteur (18) transporte une série de rangées de récipients empilés (36) qui ont été empilés dans un sac (162), ledit dispositif de transport comprenant un transporteur ayant un certain nombre de tringles parallèles (48) uniformément espacées, montées sur un support (50) qui amène lesdites tringles (48) à des zones de déchargement des piles de récipients et les en éloigne, l'espacement entre tringles (48) adjacentes étant approprié pour supporter une pile de récipients (36) couchée, des moyens (164) de retenue des récipients, prévus le long d'un côté du transporteur, qui s'étendent sur la longueur d'un certain nombre de tringles (48) de réception d'un nombre prédéterminé de rangées de récipients empilés (36) dans un sac (162), lesdits moyens (164) de retenue des récipients définissant une ouverture qui est suffisamment grande pour permettre à un sac contenant des piles de récipients (36) de passer à travers cette ouverture mais qui est inférieure à la largeur des récipients qui doivent être placés sur ledit transporteur, l'agencement étant tel qu'un sac renfermant une série de rangées de récipients empilés (36) peut être placé sur lesdites tringles (48) de telle sorte que les rangées de récipients (36) empilés sont placées entre les tringles (48), une extrémité ouverte dudit sac étant éloignée desdits moyens de retenue (164), lesdits moyens de retenue (164) retenant ces rangées de récipients (36) entre les tringles lorsque le sac est extrait à travers ladite ouverture (170, 172).

17. Un appareil selon la revendication 16, caractérisé en ce qu'un carter (166) est prévu pour ledit transporteur, un accès à la surface supérieure dudit transporteur étant assuré par une porte (34, 38) montée à charnière, cette porte (34, 38) étant articulée à charnière sur ledit carter (166), ledit carter (166) définissant un bord inférieur (172) de ladite ouverture (170, 172) et l'extrémité libre (170) de ladite porte (34, 38) lorsque celle-ci est fermée, définissant un bord supérieur de l'ouverture, ledit bord inférieur (172) retenant les piles de récipients sur ledit transporteur tandis que la face inférieure de ladite porte retient les piles de récipients (36) contre le bord inférieur (172) lorsqu'on retire le sac (162).

18. Un procédé pour charger une pile de récipients (36) dans une goulotte (12) consistant à supporter une pile de récipients (36) en une rangée couchée à proximité de ladite goulotte (12), cette goulotte possédant une entrée latérale de récipients (22) espacée au-dessus de la base de ladite goulotte (12) et au-dessous de son sommet, à pousser une rangée de récipients (36) empilés supportés vers ladite entrée de récipients (22), à guider ce mouvement de la pile à travers ladite entrée de bas en haut dans ladite goulotte (12), à supprimer la prise avec ladite pile et à permettre à celle-ci de tomber dans la goulotte au-delà de ladite entrée latérale (22).

19. Procédé selon la revendication 18, adapté pour charger une série de rangées de récipients empilés (36) dans un nombre correspondant de goulottes (12), retenir les piles de récipients (36) dans les goulottes (12) et extraire de la base de chaque goulotte (12), un récipient à la fois, ce procédé consistant à supporter sur un support (18) une série de rangées de récipients empilés (36) couchées, ces rangées étant espacées uniformément, parallèles entre elles et alignées sur lesdites entrées latérales de récipients respectives, à pousser à la fois toutes les rangées de ladite série de rangées et à les guider de vers le haut à travers lesdites entrées latérales jusque dans lesdites goulottes (32) et à les laisser tomber dans les parties inférieures des goulottes respectives.

20. Un procédé selon la revendication 19, consistant à amener les rangées supportées de récipients empilés (36) en alignement avec les goulottes (12) et à éloigner ledit support (18) jusqu'à un emplacement approprié pour charger une autre série de rangées de récipients (36) sur ce support.

21. Un procédé selon la revendication 19, consistant à supporter plusieurs séries de rangées de récipients empilés (36) sur un support mobile (18), à amener une série de rangées de récipients empilés (36) en alignement avec les entrées latérales de récipients respectives (22), à détecter le moment où le niveau des piles de récipients est situé au-dessous desdites. entrées latérales (22) de récipients et à pousser toute la série supportée et alignée de rangées de récipients empilés (36) dans leurs goulottes respectives (12) puis à amener une autre série supportée de rangées de récipients (36) empilés en alignement avec lesdites goulottes (12).

### Patentansprüche

1. Vorrichtung (10) zum Laden eines Stapels von Behältern (36) in eine Behälterrutsche (12), mit einer Einrichtung (18) zur Halterung einer Reihe gestapelter Behälter (36) auf ihrer Seite, dadurch gekennzeichnet, daß die Rutsche (12) einen mit Abstand oberhalb des Bodens und unterhalb der Oberseite der Rutsche (12) zur Bildung eines oberen und unteren Rutschenabschnittes (106, 108) angeordneten Behälterseiteneinlaß (22), wobei der obere Rutschenabschnitt (106) eine Höhe zur Aufnahme einer Reihe gestapelter Behälter (36) hat, eine Einrichtung (20) zur Leitung der geschobenen Bewegung eines Stapels von Behältern (36) von der Halterungseinrichtung (18) durch den Behälterseiteneinlaß (22) sowie eine Einrichtung (24) aufweist, um einen Stapel von Behältern (36) längs der Halterungseinrichtung (18) und der Führungseinrichtung (20) nach oben in den oberen Abschnitt (106) der Rutsche zu schieben und Kontakt mit einem in dem oberen Rutschenabschnitt (106) angeordneten derartigen Stapel (36) freizugeben, um zu ermöglichen, daß der Stapel an dem Einlaß (22) vorbei in den unteren Rutschenabschnitt (108) fällt.

2. Vorrichtung nach Anspruch 1, dadurch gekennzeichnet, daß die Halterungseinrichtung (18), wenn sie einen Stapel von Behältern (36) haltert, in Ausrichtung mit der Führungseinrichtung (20) und aus dieser Ausrichtung heraus bewegbar ist.

3. Vorrichtung nach Anspruch 1, dadurch gekennzeichnet, daß die Rutsche (12) senkrecht ist.

4. Vorrichtung nach Anspruch 3, dadurch gekennzeichnet, daß die Halterungseinrichtung (18) im wesentlichen horizontal und die Führungseinrichtung (20) eine gebogene Rampe (40) ist, um die geschobene Bewegung eines Stapels von Behältern (36) in den oberen Rutschenabschnitt (106) zu leiten.

5. Vorrichtung nach Anspruch 4, dadurch gekennzeichnet, daß die Schiebeeinrichtung (24) oberhalb der Halterungseinrichtung (18) angeordnet und derart ausgebildet ist, um längs dieser zu wandern, der Aufwärtskrümmung der Rampe (40) zu folgen und sich an dem Seiteneinlaß (22) der Rutsche (12) vorbeizubewegen, um dadurch Kontakt mit dem Stapel von Behältern (36) zur Ermöglichung seines Fallens freizugeben.

6. Vorrichtung nach Anspruch 5, dadurch gekennzeichnet, daß der obere Abschnitt (106) der Rutsche (12) oberhalb der unteren Abschnittes (108) durch eine Vielzahl von nach oben verlaufenden beabstandeten Stangen (30) definiert ist, die derart ausgebildet sind, daß sie einen Stapel von Behältern (36) einschließen, wobei ein Paar von beabstandeten Stangen (30) sich nach unten und außen weg von der Rutsche (12) zur Bildung des Seiteneinlaßes (22) in die Rutsche (12) erstrecken.

7. Vorrichtung nach Anspruch 6, dadurch gekennzeichnet, daß die Schiebeeinrichtung (24) von einem Antrieb (82) angetrieben ist, der bei Betätigung die Schiebeeinrichtung (24) oberhalb und längs der Halterungseinrichtung (18), der gebogenen Rampe (40) und an dem Seiteneinlaß (22) vorbei bewegt.

8. Vorrichtung nach Anspruch 7, weiterhin dadurch gekennzeichnet, daß die Schiebeeinrichtung (24) eine an einer von dem Antrieb (82) angetriebenen Transporteinrichtung (56, 58, 60) befestigte Platte (54) enthält, die einen Stirnabschnitt (76) aufweist und eine Breite hat, um sich zwischen den beabstandeten Stangen (30) zu bewegen, wenn die angetriebene Transporteinrichtung (56, 58, 60) die Platte (54) an dem Seiteneinlaß (22) vorbei bewegt.

9. Vorrichtung nach Anspruch 8, dadurch gekennzeichnet, daß die Platte (54) eine gewölbte sich nach hinten von dem Stirnabschnitt (76) erstreckende Oberfläche (144) aufweist, die gewährleistet, daß ein derartiger Stapel von Behältern (36) in den unteren Abschnitt (108) der Rutsche (12) fällt, indem sie Behälter (36) daran hindert, an dem Seiteneinlaß (22) hängen zu bleiben, während sie in den unteren Rutschenabschnitt (108) fallen.

10. Vorrichtung nach Anspruch 9, dadurch gekennzeichnet, daß der Antrieb (82, 150) derart gesteuert ist, daß er die Bewegung der Platte (54) bei innerhalb der beabstandeten Stangen (30) angeordneter und im Inneren der Rutsche (12) angeordneter gewölbter Oberfläche (144) zur Verhinderung des Herausfallens von Behältern (36) aus dem Seiteneinlaß (22) stoppt.

11. Vorrichtung nach Anspruch 4, weiterhin dadurch gekennzeichnet, daß sie zur Verwendung mit einer Behälterfüllmaschine ausgebildet ist, daß ein Gerät (110) an der Basis der Rutsche (108) zum Abziehen von Behältern einen nach dem anderen von dem Stapel angeordnet ist, eine Sensoreinrichtung (42, 44) zur Feststellung, wenn die Höhe der Behälter (36) auf einer vorbestimmten Höhe liegt, und zur Abgabe eines Signals, und ein die Schiebeeinrichtung (24) bewegender Antrieb (82) und eine Steuerung (CP) hierfür vorhanden ist, wobei die Steuerung (CP) bei Empfang eines Signales von der Sensoreinrichtung (42, 44) den Antrieb (82) zum Schieben eines weiteren Stapels von Behältern (36) auf der Halterungseinrichtung (18) in die Rutsche (12) betätigt und dadurch aufrechterhält, daß eine konstante Versorgung von Behältern (36) von dem unteren Rutschenabschnitt (108) durch das Gerät (110) für ein nachfolgendes Füllen abgezogen wird.

12. Vorrichtung nach Anspruch 4, dadurch gekennzeichnet, daß der untere Rutschenabschnitt (108) ein Rohr eines Durchmessers zur Aufnahme eines Stapels von Behältern (36) ist, eine Einrichtung (110) am Rohrboden zur Verhinderung des freien Falles von Behältern (36) aus dem Stapel aus dem Rohr vorgesehen ist, oberhalb des Rohres vier gleichmäßig beabstandete Stangen (30) angeordnet sind, die eine Fortsetzung des Rohres (108) nach oben zur Bildung des oberen Rutschenabschnittes (106) bilden und dadurch einen Stapel von Behältern innerhalb der Stangen (30) einschließen, ein benachbartes Paar der Stangen nach außen und unten von dem Rutscheninneren weg zur Bildung des Seiteneinlasses oberhalb des Rohres verlaufen, wobei das schräg verlaufende Paar von Stangen einen geschobenen Stapel von Behältern (36) nach oben in den oberen Rutschenabschnitt (106) leiten, um es zu ermöglichen, daß ein Abschnitt eines derartigen Stapels von Behältern in das Rohr (108) fällt.

13. Vorrichtung nach Anspruch 1 zum Laden einer Vielzahl von Stapeln von Behältern (36) in eine entsprechende Vielzahl von Rutschen (12), weiterhin dadurch gekennzeichnet, daß die Halterungseinrichtung (18) eine Vielzahl beabstandeter Reihen von gestapelten Behältern (36) auf ihren Seiten haltert und eine Vielzahl der Führungseinrichtungen (20) jede ausgerichtete gehalterte Reihe von gestapelten Behältern durch zugehörige Rutschenseiteneinläße (22) in entsprechende Rutschen (12) führen.

14. Vorrichtung nach Anspruch 13, dadurch gekennzeichnet, daß die Halterungseinrichtung (18), bei ihrer Halterung einer Vielzahl von Stapeln von Behältern (36), in Betriebsausrichtung mit der Führungseinrichtung (20) hinein und aus dieser Ausrichtung heraus bewegbar ist.

15. Vorrichtung nach Anspruch 14, dadurch gekennzeichnet, daß die Halterungseinrichtung (18) einen Förderer mit einer Vielzahl von horizontalen parallelen beabstandeten Stangen (48) vorbestimmten Abstandes zur Halterung einer gewünschten Anzahl paralleler Reihen von Behälterstapeln (36) zwischen Paaren von Stangen aufweist, wobei der Förderer in die Betriebsposition, die jede Reihe von Behältern (36) mit entsprechenden Führungsrampen (40) ausrichtet, bewegbar und nach dem Entfernen der Stapel von Behältern (36) von der Halterungseinrichtung (18) an eine andere Stelle weg von den Führungsrampen (40) bewegbar ist, um im wesentlichen gleichzeitig eine andere Vielzahl von Stapeln von Behältern (36) auf die Halterungseinrichtung (18) zu laden.

16. Vorrichtung nach Anspruch 1, dadurch gekennzeichnet, daß eine Fördereinrichtung (18) eine Vielzahl von Reihen von gestapelten Behältern (36) fördert, die in einem Beutel (162) gestapelt worden sind, wobei die Fördereinrichtung einen Förderer mit einer Vielzahl von gleichmäßig beabstandeten parallelen Stangen (48) aufweist, die auf einem Träger (50) befestigt sind, der die Stangen (48) in Richtung auf Behälterstapel-Entladegebiete und aus diesen Gebieten wegbewegt, wobei der Abstand zwischen benachbarten Stangen (48) derart ist, daß ein Stapel von Behältern (36) auf seiner Seite gehaltert wird, daß eine Behälterhalteeinrichtung (164) längs einer Seite des Förderers vorgesehen ist, die sich längs der Länge einer Vielzahl von Stangen (48) zur Aufnahme einer vorbestimmten Anzahl von Reihen

gestapelter Behälter (36) in einem Beutel (162) erstreckt, wobei die Behälterhalteeinrichtung (164) eine Öffnung definiert, die ausreichend groß ist, so daß ein Stapel von Behältern (36) speichernder Beutel hindurchgelangen kann, und kleiner als die Breite der auf den Förderer zu legenden Behälter ist, und daß die Anordnung derart ist, daß ein Beutel mit einer Vielzahl von Reihen gestapelter Behälter (36) auf die Stangen (48) gelegt werden kann, wobei Reihen gestapelter Behälter (36) zwischen den Stangen (48) angeordnet sind, ein offenes Ende eines derartigen Beutels von der Halteeinrichtung (164) entfernt ist, und die Halteeinrichtung (164) die Reihen von Behältern (36) zwischen den Stangen (48) zurückhält, wenn der Beutel durch die Öffnung (170, 172) entfernt wird.

17. Vorrichtung nach Anspruch 16, dadurch gekennzeichnet, daß ein Gehäuse (166) für den Förderer vorgesehen ist, zu dessen oberer Oberfläche Zugang durch eine angelenkte Tür (34, 38) geschaffen wird, die an dem Gehäuse (166) angelenkt ist, wobei das Gehäuse (166) eine Bodenkante (172) der Öffnung (170, 172) bildet und das freie Ende (170) der Tür (34, 38) in geschlossenem Zustand eine obere Kante der Öffnung bildet, und die Bodenkante (172) Behälterstapel auf dem Förderer zurückhält, während die Unterseite der Tür Stapel von Behältern (36) gegen die Unterkante (172) hält, während der Beutel (162) abgezogen wird.

18. Verfahren zum Laden eines Stapels von Behältern (36) in eine Rutsche (12), bei dem ein Stapel von Behältern (36) in einer Reihe auf seiner Seite im Bereich der Rutsche (12) gehaltert wird, die einen oberhalb des Bodens und unterhalb der Oberseite der Rutsche (12) mit Abstand angeordneten Behälterseiteneinlaß (22) aufweist, eine Reihe von gehalterten gestapelten Behältern (36) in Richtung auf den Behältereinlaß (22) geschoben wird, diese Bewegung des Stapels durch den Seiteneinlaß (22) nach oben in die Rutsche (12) geführt wird, der Eingriff mit dem Stapel freigegeben und es dem Stapel ermöglicht wird, in der Rutsche an dem Seiteneinlaß (22) vorbei zu fallen.

19. Verfahren nach Anspruch 18, zum Laden einer Vielzahl von Reihen gestapelter Behälter (36) in eine entsprechende Vielzahl von Rutschen (12) und zum Halten der Stapel von Behältern (36) in den Rutschen (12) und zum Abziehen eines Behälters zu einem Zeitpunkt aus der Basis jeder Rutsche (12) ausgebildet, bei dem auf einer Halterung (18) eine Vielzahl von Reihen gestapelter Behälter (36) auf ihren Seiten gehaltert wird, wobei die Reihen gleichmäßig beabstandet, parallel zueinander und in Ausrichtung mit den jeweiligen Behälterseiteneinlässen sind, alle der Vielzahl von Reihen gleichzeitig geschoben und durch die Seiteneinlässe (22) nach oben in die Rutschen (12) geführt und in die jeweiligen unteren Rutschenabschnitte fallengelassen werden.

20. Verfahren nach Anspruch 19, bei dem die gehalterten Reihen gestapelter Behälter (36) in Ausrichtung mit den Rutschen (12) bewegt werden und die Halterung (18) an eine Stelle zum Laden eines weiteren Satzes von Reihen gestapelter Behälter (36) auf die Halterung weg bewegt wird.

21. Verfahren nach Anspruch 19, bei dem mehrere Sätze von Reihen gestapelter Behälter (36) auf einer bewegbaren Halterung (18) gehaltert werden, ein Satz von Reihen gestapelter Behälter (36) in Ausrichtung mit den jeweiligen Behälterseiteneinlässen (22) bewegt werden, abgefühlt wird, wenn die Höhe der Stapel von Behältern unterhalb der Behälterseiteneinlässe (22) liegt, der gesamte ausgerichtete gehalterte Satz von Reihen gestapelter Behälter (36) in die jeweiligen Rutschen geschoben und ein weiterer gehalterter Satz von Reihen gestapelter Behälter (36) in Ausrichtung mit den Rutschen (12) bewegt wird.

FIG. 1

0 032 842

FIG. 2

FIG. 3

0 032 842

FIG. 4

FIG.5

5

FIG. 6

FIG. 7

FIG. 8

0 032 842

0 032 842

FIG.9

9

FIG.10

0 032 842

FIG. 11

0 032 842